# EUROPEAN PATENT APPLICATION

(11) **EP 4 449 868 A1**
(43) Date of publication of application: **23.10.2024**
(21) Application number: 24170512.8
(22) Date of filing: 16.04.2024
(51) Int. Cl.: A21C 11/10, A21C 11/14

(54) **METHOD FOR MANUFACTURING ROLLS**

(30) Priority: 17.04.2023 NL 2034592; 25.05.2023 NL 2034910
(71) Applicant: Radie B.V., 4104 BC Culemborg (NL)
(72) Inventor: van Blokland, Johannes, Josephus, Antonius, Culemborg (NL)
(74) Representative: IP Maison

(57) **Abstract**

The present invention relates to a method for manufacturing rolls, comprising the steps of providing one or more dough pieces, each portioned by weight for forming one roll, applying a notch pattern to a side intended as the final top of each of the one or more dough pieces, and then bulging the dough pieces.

## Description

The present invention relates to a method for manufacturing rolls, in particular rolls having a side provided with a distinctive embossing prior to baking.

Such rolls are well-known and so-called hand-folded traditional Kaiser rolls are a well-known example. In these rolls, parts are traditionally folded inwards from the perimeter of a piece of dough in a rotationally symmetrical manner, which parts always cover an adjacent part on one side, and are covered by an adjacent part on a second side. This creates a pattern with a wickerwork-like impression.

Since artisanal braiding is a relatively complex and time-consuming method, knife-shaped stamps with blades inserted in a pattern visible on the roll are used to imitate the braiding, which stamps are pressed into a piece of dough that has already been moulded and, in particular, bulged, before baking.

Although acceptable results can be achieved with this method, which can be used manually or industrially, the overall impression of the indentation made in these rolls is more that of a fan screw than that of wickerwork. Also during proofing and baking, these rolls behave differently from those described by means of the folding method described above, which adversely affects the baking nature and cracking of the crust.

Accordingly, it is an object of the present invention to propose a method for making rolls that does not have the aforementioned drawbacks, and more particularly to propose such a method by which rolls with an embossed shape, and in particular Kaiser rolls, can be manufactured mechanically and preferably on an industrial scale.

To this end, the invention proposes a method comprising the steps of providing one or more pieces of dough, each portioned by weight for forming one roll; applying a notch pattern to a side intended as the final top of each of the one or more pieces of dough; then bulging the dough pieces.

Applying a notch pattern to the dough prior to bulging ensures that the notch unfolds during baking in the same way as a traditionally made roll and, in particular, maintains a deeper position, which positively influences the crust quality, product shape and the eating properties of the end result. During and as a result of the bulging, the indentation made in the dough is anchored and the rotating movement for the bulging also produces the desired braiding effect. Bulging is preferably performed by rotating only in one direction during the rolling.

The notching pattern may be applied, for example, by stamping, using star-shaped knives, i.e. knives each originating from a centre in a radial direction at preferably equal angles to one another. The knives may extend straight or curved from a radial direction, and there may also be a rotation in the stamping direction, allowing a helical movement during stamping, which positively influences the end result.

Thus, the notch pattern comprises a number of lines originating from a centre in a radial direction, more particularly mainly evenly curved lines at a mutual equal angular distance, in order to form a Kaiser roll. In a further embodiment according to the present invention, the method comprises letting the dough pieces proof on the side provided with a notch pattern before freezing and/or baking them. This ensures that the indentation is retained and not pushed apart by the proofing. In yet a further embodiment, the dough is bulged under a bulging chamber provided with an eccentric rotation point.

Such a dough piece may be formed by punching from a dough slab, wherein in a preferred embodiment, applying the indentation pattern by stamping takes place simultaneously with the punching. Thereby, multiple dough pieces may be provided wherein a step of spreading (separation in the transport direction) of the dough pieces takes place between the punching and the bulging. Such dough pieces may - to fully utilise the dough slice and minimise the amount of scrap dough - have a substantially rectangular or square cross-section in a viewing direction facing a substrate on which they are placed. It has been found that the resulting tension in the dough during rolling, which has an uneven pattern a in rotation direction due to the non-round origin of the dough piece, leads to a further natural artisanal impression during proofing.

The invention is further illustrated by the attached figures. Herein:
- Figure shows 1 an artisan roll;
- Figure shows 2 a state-of-the-art machine-made roll;
- Figure shows 3 an unbaked dough piece formed according to the invention; and
- Figure shows 4 a baked dough piece formed according to the invention.

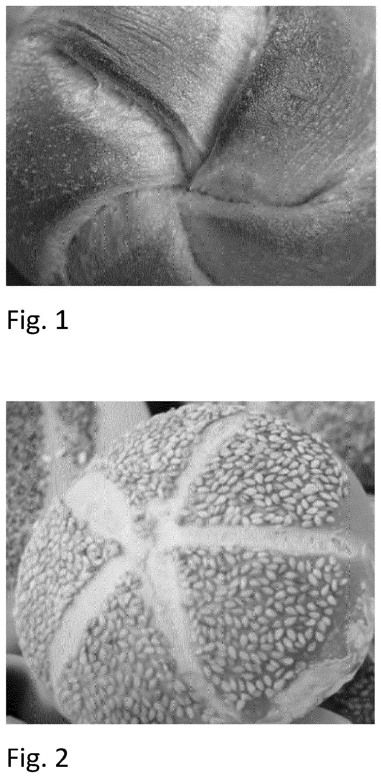

Figure 1 shows an artisan bread roll. Visible is how the dough is shaped like wickerwork, with overlapping sections of dough and a visibly shaped crispy crust.

Figure 2 shows a machine-made roll according to the state of the art, where it can be seen that the indentation has less relief and there is no artisanal cracking in the crust forms around this.

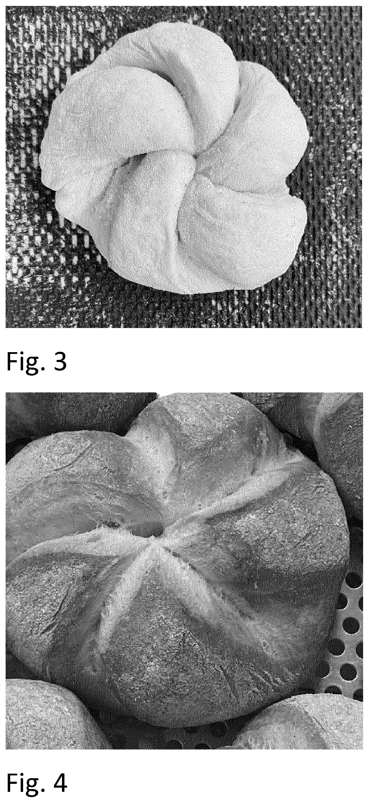

Figure 3 shows an unbaked dough piece formed according to the invention where it can be seen that the indentation is deeply formed and with overlapping dough pieces.

Figure 4 shows a baked dough formed from a dough piece as shown in figure 3. In figure 4, it can be seen that the structure after baking is similar to that of the artisanal baked roll.

The embodiments shown are examples only and do not limit the scope of the invention as defined by the following claims.

## Claims

1. Method of manufacturing rolls, including the steps of:
- Providing one or more pieces of dough, each with a weight portioned to form one roll;
- Applying a notch pattern to a side intended as the final top of each of the one or more dough pieces;
- Subsequently bulging of the or more pieces of dough.

2. Method according to claim 1, comprising applying the notch pattern by stamping.

3. Method according to claim 1 or 2, wherein the notch pattern comprises a number of lines originating from a centre in a radial direction, more particularly essentially equally curved lines at equal angular intervals, in order to form a Kaiser roll.

4. Method according to one of the preceding claims, comprising letting the dough pieces proof on the notch-patterned side before freezing and/or baking.

5. Method according to any of the preceding claims, wherein the bulging is performed by bulging the dough piece under a bulging chamber provided with an eccentric rotation point.

6. Method according to any of the preceding claims, wherein the at least one dough piece is formed by punching from a dough sheet, and wherein the application of the indentation pattern by stamping is performed simultaneously with the punching.

7. Method according to any of the preceding claims, in which several dough pieces are provided and a step of spreading the dough pieces takes place between punching and bulging.

8. Method according to claim 7, wherein the provided dough pieces have a substantially rectangular or square cross-section in a viewing direction facing a substrate on which they are placed.
